# EUROPÄISCHE PATENTSCHRIFT

(11) **EP 2 174 027 B1**
(45) Veröffentlichungstag und Bekanntmachung des Hinweises auf die Patenterteilung: **05.09.2012**
(21) Anmeldenummer: 08761208.1
(22) Anmeldetag: 19.06.2008
(51) Int. Cl.: F16C 29/02, F16C 29/08

(54) **TRAGKÖRPER EINER HYDROSTATISCHEN LINEARFÜHRUNG**
CARRIER BODY OF A HYDROSTATIC LINEAR GUIDE
CORPS DE SUPPORT D'UN GUIDAGE LINÉAIRE HYDROSTATIQUE

(30) Priorität: 03.07.2007 DE 102007030883
(43) Veröffentlichungstag der Anmeldung: 14.04.2010
(60) Teilanmeldung: 11164387.0
(73) Patentinhaber: Schaeffler Technologies AG & Co. KG, 91074 Herzogenaurach (DE)
(72) Erfinder: BAUER, Wolfgang, 66292 Riegelsberg (DE); GIETL, Thomas, 91257 Pegnitz (DE); PESCHKE, Harald, 90587 Veitsbronn (DE)
(86) Internationale Anmeldenummer: PCT/EP2008/057766
(87) Internationale Veröffentlichungsnummer: WO 2009/003844

(56) Entgegenhaltungen:
- EP-A- 1 561 978
- US-A1- 2003 107 187
- US-A1- 2004 042 689

## Beschreibung

### Gebiet der Erfindung

Die Erfindung betrifft einen Tragkörper einer hydrostatischen Linearführung gemäß dem Oberbegriff des Anspruchs 1.

### Hintergrund der Erfindung

Ein derartiger Tragkörper einer hydrostatischen Linearführung ist beispielsweise aus der US 2004/0042689 A1 bekannt. Die dort vorgeschlagene Dichtung ist zur Vermeidung eines unerwünschten Ölaustritts am Rand eines Tragkörpers angeordnet, der sich hydrostatisch gelagert gegenüber einer Führungsschiene entlang einer vorgegebenen Verstellrichtung linear bewegt. Für die hydrostatische Lagerung wird Öl über Zufuhrleitungen in Taschen des Tragkörpers eingepumpt und zur Ausbildung eines Gleitfilms gegen die Führungsschiene gepresst. Über geeignete Rückströmungskanäle wird das Öl abgeführt und in einem Kreislaufprozess erneut in die Taschen zurückgepumpt. Die am Rand des Tragkörpers angeordnete Dichtung umfasst Dichtlippen, um eine unnötige Leckage des Öls bei der Verstellung des Tragkörpers gegenüber der Führungsschiene zu vermeiden. Hierzu ist an den parallel zur Verstellrichtung verlaufenden Längsseiten des Tragkörpers jeweils ein Längsdichtungsabschnitt mit einer in Verstellrichtung verlaufenden ersten Dichtlippe und an den Querkanten bzw. Querseiten des Tragkörpers jeweils ein Querdichtungsabschnitt mit einer quer zur Verstellrichtung verlaufenden zweiten Dichtlippe angeordnet. Die Längsdichtungsabschnitte und die Querdichtungsabschnitte sind dabei insbesondere über Aufnahmebereiche miteinander verbunden.

Zur Funktionsfähigkeit einer hydrostatischen Linearführung mit einem gegenüber einer Führungsschiene auf einem Gleitfilm gleitenden Tragkörper muss die eingesetzte Dichtung eine gewisse dynamische Öldichtheit bewirken, so dass insgesamt ein Ölverlust möglichst vermieden wird. Im Stillstand des Systems sollte die Dichtung gegenüber der Führungsschiene nach außen möglichst öldicht abschließen.

### Aufgabe der Erfindung

Es ist Aufgabe der Erfindung, einen Tragkörper der eingangs genannten Art einer hydrostatischen Linearführung anzugeben, die hinsichtlich ihrer Öldichtheit gegenüber den bekannten Ausführungen des Standes der Technik weiter verbessert ist.

### Lösung der Aufgabe

Diese Aufgabe wird erfindungsgemäß dadurch gelöst, dass die ersten Dichtlippen und die zweiten Dichtlippen mit einer stetigen Krümmung ineinander übergehen.

Die Erfindung geht dabei in einem ersten Schritt von der Überlegung aus, dass insbesondere Übergangsstellen zwischen dem Längsdichtungsabschnitt und dem Querdichtungsabschnitt bei einer dynamischen Ölabdichtung problematisch sind. Im Betrieb des Systems wird nämlich aufgrund der Bewegung des Tragkörpers gegenüber der Führungsschiene an den Dichtlippen stets etwas Öl austreten, welches jedoch bei einer entgegengesetzten Bewegung wieder in das System aufgenommen wird. Gerade an den Stoßstellen zwischen einem Längsdichtungsabschnitt und einem Querdichtungsabschnitt ist eine derartige Abdichtung jedoch problematisch.

Bei bisher eingesetzten Dichtungen stoßen die Dichtlippen des Längsdichtungsabschnitts und des Querdichtungsabschnitts in den Eckbereichen stumpf aufeinander. Mit anderen Worten endet die eine Dichtlippe an der Stelle ihres Auftreffens auf die hierzu quer verlaufende andere Dichtlippe. In einem Eckbereich schräg zur Verstellrichtung austretendes Öl kann somit aufgrund der eindimensionalen Bewegung des Tragkörpers gegenüber der Führungsschiene nicht mehr ausreichend in das System zurückgelangen.

Die Erfindung erkennt nun in einem weiteren Schritt, dass sich dieses Problem vermeiden lässt, wenn die erste Dichtlippe und die zweite Dichtlippe mit einer stetigen Krümmung ineinander übergehen. Auf diese Weise wird zunächst ein problematischer Eckbereich, an dem bei einer Bewegung des Tragkörpers gegenüber der Führungsschiene leicht eine Leckage auftreten kann, vermieden. Vielmehr wird eine umlaufende Dichtkante geschaffen, wobei infolge der stetigen Krümmung durch die Bewegung gegebenenfalls verursachte Leckagestellen vermieden sind. Öl wird sicher zurückgehalten. Aber auch im Eckbereich austretendes Öl kann bei dieser Formgestaltung bei einer entgegengesetzten Bewegung wieder in das System zurückgeholt werden.

Insgesamt wird durch diese Ausgestaltung gegenüber dem Stand der Technik eine verbesserte dynamische Öldichtheit erzielt. Auch wird durch die umlaufende Dichtkante die Öldichtheit im Stillstand erhöht.

Unter dem Begriff "Krümmung" wird hierbei die Richtungsänderung der Dichtlippen pro Längeneinheit oder mit anderen Worten die erste Ableitung des durch die Dichtlippen gegebenen Kurvenverlaufs gegenüber einer Geraden verstanden.

Die Dichtung weist zwei Längsdichtungsabschnitte und zwei Querdichtungsabschnitte und insbesondere insgesamt eine geschlossene Form auf. Die Dichtung kann als Ganzes hergestellt oder aus Einzelteilen gefertigt sein, die anschließend zur Dichtung zusammengesetzt werden. Als Materialien für die Dichtung eignen sich prinzipiell elastische Werkstoffe wie Gummi oder dergleichen und insbesondere Elastomere, Thermoplaste oder thermoplastische Elastomere. Insbesondere können ein Nitril-Butadien-Kautschuk (NBR), ein Acrylat-Kautschuk (ACM), ein Fluor-Kautschuk (FKM) oder ein Ethylen-Propylen-Dien-Monomer (EPDM) eingesetzt werden. Auch ist ein Polyamid prinzipiell vorstellbar. Derartige Kunststoffe lassen sich leicht beispielsweise durch Spritzguss oder durch Extrusion herstellen bzw. verarbeiten.

Hinsichtlich des Übergangsbereiches zwischen der ersten Dichtlippe und der zweiten Dichtlippe wird durch die Erfindung lediglich gefordert, dass dieser Bereich eine stetige Krümmung aufweisen muss. Insofern bieten sich verschiedene und insbesondere auch wellenförmige Verläufe an, solange die Krümmung nicht sprunghaft und somit unstetig im Eckbereich zwischen dem Längsdichtungsabschnitt und dem Querdichtungsabschnitt ihren Wert wechselt.

Vorteilhafterweise, da leicht herstellbar, gehen die erste Dichtlippe und die zweite Dichtlippe über einen Bogen ineinander über. Insbesondere kann der Bogen ein Kreisbogen sein, so dass der Krümmungsbereich entlang des Kurvenverlaufs eine konstante Krümmung aufweist. Auf diese Weise ist der Eckbereich zwischen dem Längsdichtungsabschnitt und dem Querdichtungsabschnitt gleichförmig ausgestaltet, was hinsichtlich der Öldichtheit eine weitere Verbesserung ergibt.

In einer weiteren vorteilhaften Ausgestaltung umfasst der Querdichtungsabschnitt eine dritte Dichtlippe, die im Wesentlichen parallel zur zweiten Dichtlippe verläuft. Der Querdichtungsabschnitt ist demnach doppellippig ausgestaltet. Durch diese Ausgestaltung kann eine Funktionentrennung dergestalt vorgenommen werden, dass die zweite Dichtlippe die Funktion der Ölabdichtung übernimmt, während die dritte Dichtlippe die Funktion einer Schmutz-, Staub-oder Partikelabscheidung aufweist und somit verhindert, dass Schmutz- oder Staubpartikel in das Innere des Tragkörpers gelangen und somit die Funktionsfähigkeit der Linearführung gefährden. Hierzu ist es insbesondere vorgesehen, dass die dritte Dichtlippe von außen in Richtung auf den Innenraum des Tragkörpers betrachtet der zweiten Dichtlippe vorgeschaltet ist. Insbesondere können sich aufgrund der verschieden vorgesehenen Funktionalitäten die Profile der zweiten und der dritten Dichtlippe voneinander unterscheiden.

Bevorzugt ist die entlang des Längsdichtungsabschnitts verlaufende erste Dichtlippe derart ausgestaltet, dass ihre Höhe, d.h. ihre Ausdehnung im Wesentlichen senkrecht zum Untergrund, entlang der Verstellrichtung wellenförmig schwankt. Durch eine derartige Ausgestaltung wird für den Längsdichtungsabschnitt ein Optimum zwischen Öldichtheit, Reibung und Verschleiß erzielt. Über die Anzahl der Wellenzüge entlang des Längsdichtungsabschnitts können die gewünschten Eigenschaften je nach Anforderung und je nach Auslegung der hydrostatischen Linearführung angepasst bzw. eingestellt werden. Durch die wellenförmige Ausgestaltung wird erreicht, dass die Dichtlippe der Führungsschiene flächig aufliegt, wodurch die Dichtheit gegenüber einer Auflagekante verbessert ist.

In einer zweckmäßigen Ausgestaltung schwankt die Höhe der ersten Dichtlippe entlang der Verstellrichtung sinusförmig. Hierdurch wird entlang des Längsdichtungsabschnitts eine sich gleichmäßig wiederholende Auflagefläche der Dichtlippe geschaffen.

Die beschriebene wellenförmige Gestaltung der Höhe einer Dichtlippe, insbesondere einer Dichtlippe eines Längsdichtungsabschnitts, ist eine auch eigenständig erfinderische Idee. Eine derartige Ausgestaltung verbessert durch die flächenförmige Auflage und im Falle einer Ausgestaltung entlang eines Längsdichtungsabschnitts durch den wellenförmigen Verlauf entlang der Bewegungsrichtung insbesondere für ein hydrostatische Linearführung die dynamische Öldichtheit gegenüber einer geraden Kante. Durch den wellenförmigen Verlauf entlang der Verstellrichtung wird während des Betriebs an einem Wellenzug austretendes Öl vom nächsten Wellenzug wieder in das System zurückgeholt. In einer weiter vorteilhaften Ausgestaltung weisen die erste und/oder die zweite Dichtlippe quer zu ihrer Längsrichtung ein Profil mit einem spitz zulaufenden Ende auf. Durch die Anbringung einer Spitze an die Außenkante der jeweiligen Dichtlippe wird deren Anpressung gegenüber der Führungsschiene erhöht, was wiederum hinsichtlich der Dichtheit von Vorteil ist. Dabei muss die Spitze im Profil nicht notwendigerweise symmetrisch ausgebildet sein, sondern kann zu einer Pumpwirkung und somit zu einer Verbesserung der dynamischen Öldichtheit asymmetrisch ausgestaltet sein.

Für einen kontinuierlichen und gleichmäßigen Übergang der ersten Dichtlippe ist zweckmäßigerweise ein einheitliches Profil für die ersten und die zweite Dichtlippe vorgesehen. Gleichwohl ist es ebenso gut vorstellbar, dass sich die Profile der ersten und der zweiten Dichtlippe voneinander unterscheiden. In diesem Fall gehen die unterschiedlichen Profile von erster und zweiter Dichtlippe im Übergangsbereich allmählich und kontinuierlich ineinander über, so dass dort keine die Öldichtheit herabsetzenden sprunghaften Veränderungen auftreten.

Um den Anpressdruck der Dichtlippen weiter zu erhöhen, ist zweckmäßigerweise die erste und/oder die zweite Dichtlippe aus einem Material gefertigt, welches gegenüber dem übrigen Dichtungsmaterial eine erhöhte Steifigkeit aufweist. Dies kann beispielsweise durch eine Anpassung des verwendeten Kunststoffs hinsichtlich seiner Zusammensetzung geschehen oder insbesondere dadurch, dass die Dichtlippen mit einem Trägermaterial, insbesondere mit einem Metall oder einem Kunststoff, armiert sind. In beiden Fällen sind die Dichtlippen gegenüber dem übrigen Material der Dichtung versteift, wodurch sich innerhalb eines gewissen Rahmens eine Verbesserung sowohl der dynamischen als auch der statischen Öldichtheit erzielen lässt.

Die Dichtung als solche kann prinzipiell an dem Tragkörper angeklebt, diesem angespritzt oder im Herstellungsverfahren mit diesem vernetzt, insbesondere vulkanisiert sein. Zur Erhöhung der Funktionssicherheit umfassen der Längsdichtungsabschnitt und/oder der Querdichtungsabschnitt jedoch zusätzliche Mittel zu einer form- und/oder kraftschlüssigen Anbindung an eine Komponente der Linearführung, wie insbesondere an einen Tragkörper. Derartige Mittel können beispielsweise Ausnehmungen, Nuten oder Stege sein, die mit entsprechend komplementär ausgestalteten Elementen der Komponente der Linearführung zusammenwirken. Insbesondere kann die Dichtung Mittel für eine Clipsverbindung umfassen.

Wie erwähnt kann die Dichtung einteilig gefertigt oder aus mehreren Einzelteilen zusammengesetzt sein. In einer zweckmäßigen Ausgestaltung ist die Dichtung mehrteilig gefertigt, wobei die Einzelteile über jeweils eine Stoßkante miteinander fest verbunden, insbesondere vernetzt, sind. Zwar können die Stoßkanten grundsätzlich auch miteinander verklebt werden, jedoch bietet sich eine Vernetzung und insbesondere eine Vulkanisation an, da letztere eine Verbindung mit einer höheren Öldichtigkeit darstellt. Auch sind an einen geeigneten Kleber hohe Anforderungen hinsichtlich seiner Ölbeständigkeit und Öldichtigkeit zu stellen. Ferner sollte der Kleber nach dem Aushärten möglichst die gleiche Elastizität haben wie der damit verklebte Dichtungswerkstoff. Auch kann die Vernetzung direkt in einem Werkzeug erfolgen, beispielsweise unter Druck-und/oder Temperatureinwirkung, wodurch eine sichere Fügung der Einzelteile erfolgt, ohne dass die Gefahr eines Versatzes besteht, was wiederum hinsichtlich der Öldichtheit nachteilig wäre.

Für eine sichere und dauerhafte Fügung der Einzelteile, sei es durch eine Verklebung oder durch eine Vernetzung, ist es günstig, wenn die Stoßkanten jeweils gegenüber der Längsrichtung der Dichtlippen schräg verlaufen oder stufenförmig ausgebildet sind. Beide Maßnahmen erhöhen die Fügefläche, so dass die Verbindung insgesamt verbessert ist. Insbesondere können durch eine derartige Ausführung Fertigungstoleranzen kompensiert werden.

In einer weiter zweckmäßigen Ausgestaltung sind die Stoßkanten zwischen den Einzelteilen jeweils in dem Längsdichtungsabschnitt angeordnet. Dabei ist berücksichtigt, dass die Anbringung von Stoßkanten direkt in den Eckbereichen zwischen einem Längsdichtungsabschnitt und einem Querdichtungsabschnitt problematisch sowohl hinsichtlich der Öldichtheit als auch hinsichtlich der Lebensdauer der Verbindung ist. Weiter spricht für eine Anbringung der Stoßkanten in einem Längsdichtungsabschnitt gegenüber einer Anbringung in einem Querdichtungsabschnitt die Tatsache, dass ein Werkzeug für den Spritzguss eines den Übergang in den Querdichtungsabschnitt aufweisenden Längsdichtungsabschnitts für den Regelfall komplizierter und daher kostenintensiver ist als ein Werkzeug für den Spritzguss eines Querdichtungsabschnitts, der den Übergang oder den Eckbereich in bzw. zu dem Längsdichtungsabschnitt aufweist. Im Regelfall genügt es nämlich, den Längsdichtungsabschnitt mit einer einzelnen Dichtlippe zu versehen, während der Querdichtungsabschnitt vorteilhafterweise mit zwei parallel verlaufenden Dichtlippen ausgestattet ist. Im Falle des Vorsehens einer Stoßkante in einem Querdichtungsabschnitt müsste demnach das Werkzeug zur Herstellung des Längsdichtungsabschnitts dafür ausgebildet sein, im Übergangsbereich den Beginn einer zweiten Dichtlippe herauszuformen. Im umgekehrten Fall läuft in einem Übergangsbereich, der von einem Querdichtungsabschnitt umfasst ist, die zweite Dichtlippe schlichtweg aus, was spritztechnisch einfacher umzusetzen ist.

Insofern ist es herstellungstechnisch kostengünstiger und einfacher, wenn der Querdichtungsabschnitt einschließlich eines überwiegenden Bereiches der stetigen Krümmung als ein Einzelteil gefertigt ist. Die Vernetzung oder Verklebung oder allgemein die Anfügung des Längsdichtungsabschnitts kann dann in dem Werkzeug auch selbst vorgenommen werden.

In einer zweckmäßigen Weiterbildung ist zur Abdichtung gegenüber einer Komponente der Linearführung im Einbauzustand, d.h. insbesondere gegenüber dem Tragkörper, von der Dichtung eine vierte Dichtlippe umfasst. Diese verläuft dann zweckmäßigerweise an dem Innenrand der Dichtung gegenüber der Komponente der Linearführung, auf welcher die Dichtung montiert ist.

In einer zweckmäßigen Ausgestaltung ist die Dichtung an dem umlaufenden Rand der Ausnehmung eines Tragkörpers für eine hydrostatische Linearführung angeordnet, wobei die zentrale Ausnehmung des Tragkörpers zur Aufnahme einer Längs- oder Führungsschiene ausgebildet ist.

### Kurze Beschreibung der Zeichnung

Ausführungsbeispiele der Erfindung werden anhand einer Zeichnung näher erläutert. Dabei zeigen:
- Fig. 1: in einer perspektivischen und teilweise transparenten Darstellung eine an einem Tragkörper einer hydrostatischen Linearführung angeordnete umlaufende Dichtung mit einem Längsdichtungsabschnitt und einem Querdichtungsabschnitt,
- Fig. 2: in einer perspektivischen Darstellung den Tragkörper einer hydrostatischen Linearführung mit einer daran befestigten umlaufenden Dichtung,
- Fig. 3: in einer perspektivischen Teilansicht einen Ausschnitt des Querdichtungsabschnittes der Dichtung gemäß Fig. 1,
- Fig. 4: in einer perspektivischen Teilansicht einen Ausschnitt des Längsdichtungsabschnitts der Dichtung gemäß Fig. 1,
- Fig. 5: in einer perspektivischen Teilansicht den Fügebereich zwischen einem Längsdichtungsabschnitt und einem Querdichtungsabschnitt der Dichtung gemäß Fig. 1 und
- Fig. 6: in einer perspektivischen Teilansicht den Blick auf eine Schnittkante des an einer Trägerplatte angeordneten Querdichtungsabschnitts der Dichtung gemäß Fig. 1.

### Ausführliche Beschreibung der Zeichnung

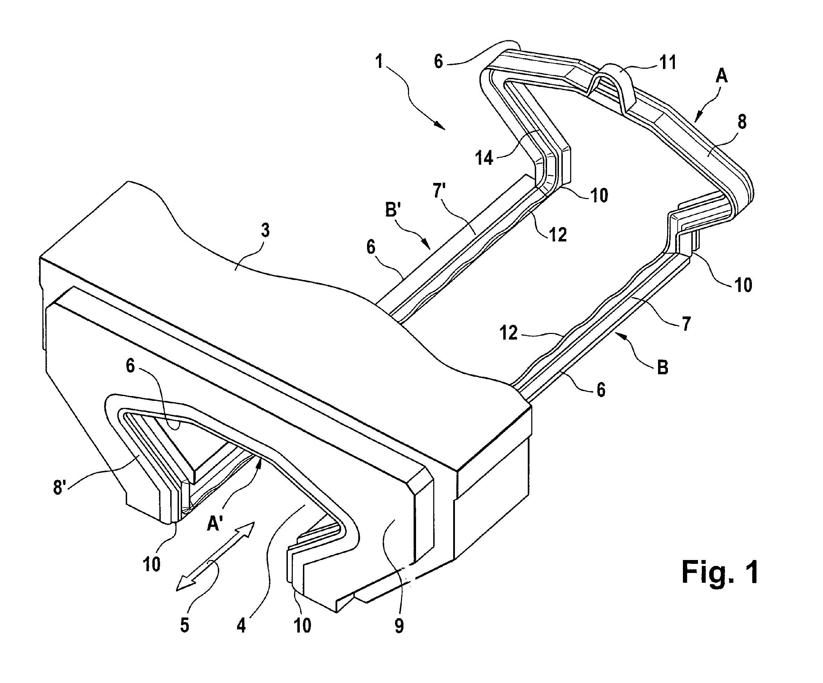

In Fig. 1 ist in einer perspektivischen und teilweise transparenten Darstellung eine umlaufende Dichtung 1 gezeigt, die an einem Tragkörper 3 einer hydrostatischen Linearführung angebracht ist. Der Tragkörper 3 weist eine zentrale Ausnehmung 4 auf, die der Aufnahme einer nicht dargestellten Führungsschiene dient. Weiter weist der Tragkörper 3 an seiner Innenseite eine Anzahl von Öltaschen (hier nicht dargestellt) auf, in welche über entsprechende Zuführleitungen Öl gepumpt wird. Über eine entsprechende Oberflächengestaltung tritt das Öl aus den Taschen aus und bildet gegenüber der in der Ausnehmung 4 geführten Führungsschiene an der Innenseite einen Gleitfilm, so dass der Tragkörper 3 gegenüber der Führungsschiene entlang der eingezeichneten Verstellrichtung 5 hydrostatisch gelagert linear verstellbar ist. Der Tragkörper 3 und die nicht dargestellte Führungsschiene bilden gemeinsam eine so genannte hydrostatische Linearführung.

An dem umlaufenden Rand 6 der zentralen Ausnehmung 4 des Tragkörpers 3 ist die einstückige und ebenfalls umlaufende Dichtung 1 entlang geführt. Dabei ist die Dichtung 1 mittels Stegen und Nuten formschlüssig an dem Tragkörper 3 befestigt. Zusätzlich kann eine Clipsverbindung oder eine Verklebung sowie eine Vernetzung der Dichtung 1 gegenüber dem Tragkörper 3 vorgenommen sein. In der Regel wird der Tragkörper 3 aus einem Metall bestehen. Eine Vernetzung wird dabei über einen Haftvermittler vorgenommen.

Die umlaufende Dichtung 1 umfasst insgesamt zwei Längsdichtungsabschnitte 7 und 7', die sich parallel zur Verstellrichtung 5 an den der Ausnehmung 4 bzw. der Führungsschiene zugewandten Längskanten des Tragkörpers 3 erstrecken, und zwei im Wesentlichen quer zur Verstellrichtung 5 verlaufende Querdichtungsabschnitte 8 und 8', die die zur Verstellrichtung 5 quer verlaufenden Kanten des Tragkörpers 3 gegenüber der Führungsschiene abdichten. Die Längsdichtungsabschnitte 7 und 7' gehen dabei jeweils an Eckbereichen 10 in die Querdichtungsabschnitte 8 und 8' über. Die Querdichtungsabschnitte 8 und 8' sind hierbei an einer Trägerplatte 9 befestigt, die wiederum mit dem eigentlichen Tragkörper 3 verschraubt ist. Die Trägerplatte 9 kann entweder aus einem Kunststoff oder aus einem Metall bestehen. An den nach Fig. 1 oberen Seiten der beiden Querdichtungsabschnitte 8 und 8' befindet sich weiter ein bogenförmige Dichtzone 11, welche der Abdichtung einer Ausnehmung in der Trägerplatte 9 dient, die der Ölrückführung dient. Über eine innen liegende weitere Dichtlippe gegenüber dem Tragkörper 3 wird über die Öltaschen ausgetretenes und über die Gleitzone geflossenes Öl zu der Dichtzone 11 geleitet und dort abgezogen. Das abgezogene Öl wird dann erneut in die Öltaschen gepumpt, so dass insgesamt ein Ölkreislauf gegeben ist.

Man erkennt des Weiteren in Fig. 1 eine entlang der beiden Längsdichtungsabschnitte 7 und 7' verlaufende erste Dichtlippe 12, die eine wellenförmige Gestalt aufweist. Ebenso wird aus Fig. 1 eine zweite Dichtlippe 14 ersichtlich, die jeweils entlang den beiden Querdichtungsabschnitten 8 und 8' verläuft. In den Eckbereichen 10 gehen die erste Dichtlippe 12 und die zweite Dichtlippe 14 jeweils mit einer stetigen Krümmung ineinander über. Dadurch ergibt sich insgesamt eine den Rand 6 der Ausnehmung 4 umlaufende, einheitliche Dichtkante, die im Stillstand eine statische und im Betrieb eine dynamische Öldichtheit des Tragkörpers 3 gegenüber der Führungsschiene bewirkt.

Teile der Längsdichtungsabschnitte 7 und 7', der Querdichtungsabschnitte 8 und 8' sowie der dieser entlang verlaufenden ersten Dichtlippe 12 und zweiten Dichtlippe 14 sind den weiteren Figuren entnehmbar. Insbesondere ist die Dichtung 1 aus vier Einzelteilen A, A', B und B' gefertigt, wobei die vier Einzelteile A, A', B und B' im Wesentlichen durch die beiden Längsdichtungsabschnitte 7 und 7' sowie durch die beiden Querdichtungsabschnitte 8 und 8' gebildet sind. Die Stoßstellen zwischen den Einzelteilen A, A', B und B' befinden sich jedoch nicht in den Eckbereichen 10, sondern sind in dem Bereich der Längsdichtungsabschnitte 7 und 7' angeordnet. Man erkennt dies in Figur 1 an den dort eingezeichneten Querlinien. Die Querdichtungsabschnitt 8 und 8' einschließlich der zugehörigen Eckbereiche 10 sind jeweils als ein Einzelteil A bzw. A' gefertigt. Die die Einzelteile A und A' verbindenden weiteren Einzelteile B und B' umfassen im Wesentlichen die beiden Längsdichtungsabschnitte 7 bzw. 7'. Die Dichtung 1 insgesamt ist aus einem thermoplastischen Elastomer oder einem Elastomer mittels eines Spritzgussverfahrens gefertigt. Die Einzelteile A, A', B und B' sind weiter durch eine Vernetzung und insbesondere durch eine Vulkanisation bereits im Werkzeug fest miteinander verbunden.

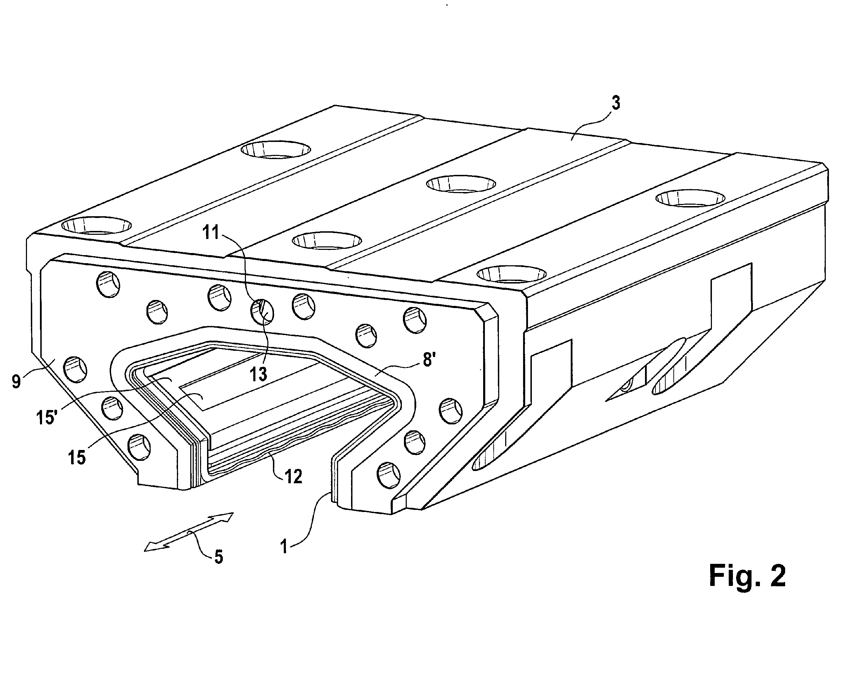

In Fig. 2 ist der Tragkörper 3 der hydrostatischen Linearführung mit mehr Details gezeigt. Man erkennt nun deutlich die Trägerplatte 9, die den Querdichtungsabschnitt 8 der umlaufenden Dichtung 1 aufnimmt. Am oberen Ende, mittig, der Trägerplatte 9 ist eine Ölrückführöffnung 13 zu erkennen. Über diese Ölrückführöffnung 13 wird mittels der innen liegenden bogenförmigen Dichtzone 11 aus der Gleitzone austretendes Öl abgezogen. Im Inneren des Tragkörpers 3 wird eine Öltasche 15 ersichtlich. Die Öltasche 15 ist von einem Flächenbereich 15' umgeben, der gegen die nicht eingezeichnete Führungsschiene ein geringes Spaltmaß bildet. Auf diesem Flächenbereich 15' bildet sich mittels des aus der Öltasche 15 unter Druck austretendem Öl eine Gleitzone, so dass der Tragkörper 3 auf der Führungsschiene gleiten kann. Aus der Gleitzone 15' gegen den Querdichtungsabschnitt 8 austretendes Öl wird über eine innere, weitere Dichtlippe gesammelt und über die Ölrückführöffnung 13 aus der bogenförmigen Dichtzone 11 abgezogen.

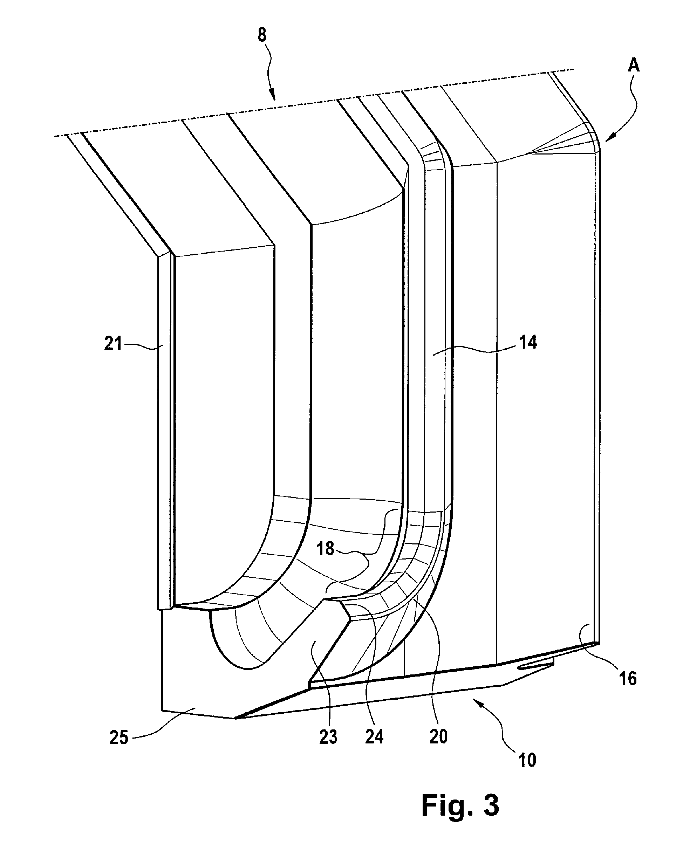

Fig. 3 zeigt in einer Teilansicht perspektivisch einen Ausschnitt des Querdichtungsabschnitts 8 einschließlich eines mitgefertigten unteren Eckbereiches 10 zum Übergang in den Längsdichtungsabschnitt 7'. Mit anderen Worte ist ein Ausschnitt des Einzelteils A gem. Fig. 1 dargestellt. Man erkennt nun deutlich die innen verlaufende zweite Dichtlippe 14, die zur Ölabdichtung gegenüber der Führungsschiene quer zur Verstellrichtung 5 vorgesehen ist. Weiter umfasst der Querdichtungsabschnitt 8 eine parallel zur zweiten Dichtlippe 14 verlaufende dritte Dichtlippe 16, die zur Schmutz- oder Partikelabscheidung gegenüber der Führungsschiene ausgebildet ist.

Die innere, zweite Dichtlippe 14 geht im Eckbereich 10 in einen Bereich stetiger Krümmung 18 über. Der Bereich stetiger Krümmung 18 ist hierbei als ein Bogen 20 ausgebildet. An der Innenkante des Querdichtungsabschnitts 8 ist weiter eine vierte Dichtlippe 21 angeordnet, die als Nebenabdichtung zur Ölabdichtung gegenüber dem Tragkörper 3 dient.

Am unteren Ende des Bogens 20 der zweiten Dichtlippe 14 ist quer zu deren Verlauf das Profil 23 dieser Dichtlippe 14 erkennbar. Das Profil zeigt am oberen Ende eine Spitze 24, wodurch sich die Anpressung der zweiten Dichtlippe 14 gegenüber der Führungsschiene erhöht. Zur Verstärkung der Anpressung ist die zweite Dichtlippe 14 weiter insgesamt durch eine Anpassung der Materialzusammensetzung in ihrer Steifigkeit gegenüber dem übrigen Material der Dichtung 1 erhöht. Alternativ wird eine Armierung mit einem Metall eingesetzt.

Weiter ist am linken unteren Ende des dargestellten Querdichtungsabschnitts 8, d.h. am Ende des Eckbereichs 10, eine schräg verlaufende Stoßkante 25 erkennbar, die zur Verbindung mit einem Längsdichtungsabschnitt 7 oder 7' ausgebildet ist.

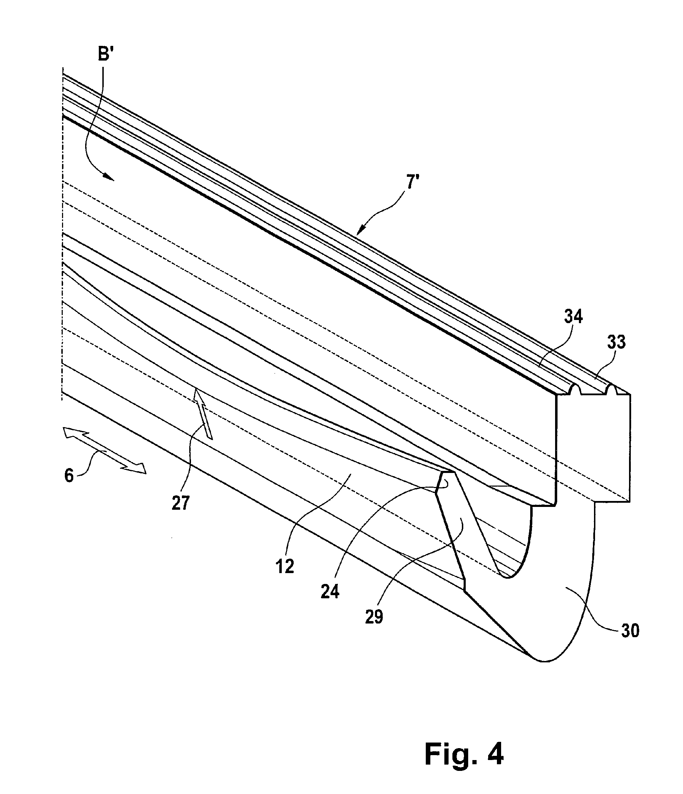

In Fig. 4 ist wiederum in einer perspektivischen Teilansicht ein Ausschnitt des Längsdichtungsabschnitts 7' dargestellt, wie er an der Stoßkante 25 des Querdichtungsabschnitts 8 gemäß Fig. 3 angebunden ist. Mit anderen Worten ist ein Ausschnitt des Einzelteils B' gezeigt. An der Innenkante des Längsdichtungsabschnitts 7' wird die erste Dichtlippe 12 ersichtlich, die parallel zu der Verstellrichtung 5 verläuft. Man erkennt nun deutlich, dass die Höhe 27 der ersten Dichtlippe 12 entlang der Verstellrichtung 5 wellenförmig schwankt. Im Profil 29 der ersten Dichtlippe 12 wird wiederum deutlich, dass auch die erste Dichtlippe 12 in einer Spitze 24 endet.

Am rechten unteren Ende des Längsdichtungsabschnitts 7' befindet sich wiederum eine schräg verlaufende Stoßkante 30, die zur Fügung an der Stoßkante 25 des mit dem Querdichtungsabschnitt 8 gemeinsam gefertigten Eckbereiches 10 gemäß Fig. 3 vorgesehen ist.

Entlang dem oberen Rand des Längsdichtungsabschnitts 7' gemäß Fig. 4 befinden sich zwei Stege 33 und 34, die der formschlüssigen Anbindung des Längsdichtungsabschnitts 7' an den Tragkörper 3 dienen.

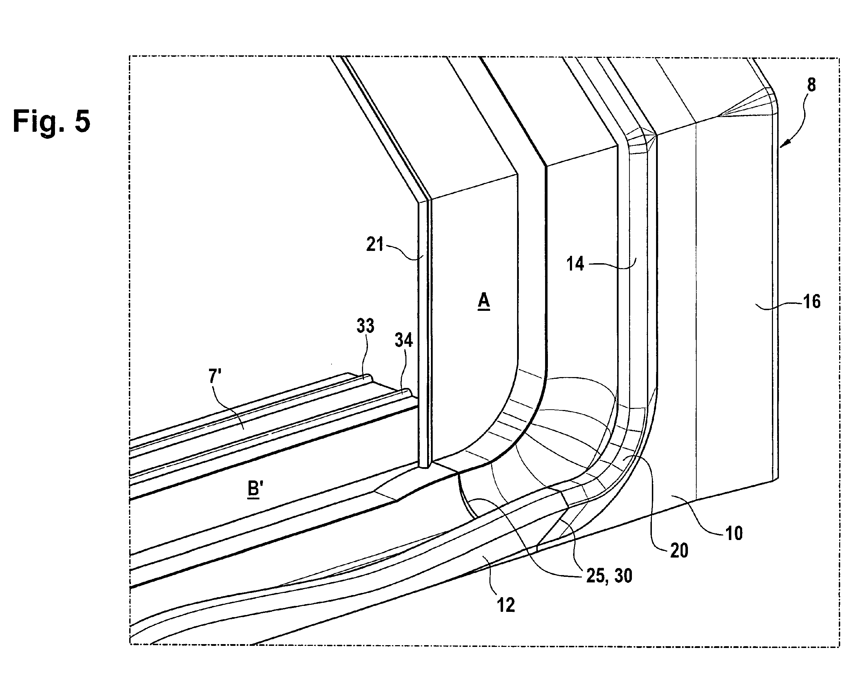

In Fig. 5 sind nun die in den Fig. 3 und 4 gezeigten Einzelteile in gefügter Position gezeigt. Dabei ist der Längsdichtungsabschnitt 7' durch Vernetzung an den Stoßkanten 25 und 30 mit dem gemeinsam mit dem Querdichtungsabschnitt 8 gefertigten Eckbereich 10 verbunden. Es wird nun ersichtlich, dass die zweite Dichtlippe 14 über einen Bereich stetiger Krümmung 18, nämlich durch einen Bogen 20 in die erste Dichtlippe 12 übergeht. Durch die Vernetzung der Stoßkanten 25 und 30 im Werkzeug ist ein seitlicher Versatz dieser Stoßkanten 25 und 30 gegeneinander vermieden, wodurch sich insgesamt ein glatter und kontinuierlicher Übergang der beiden Einzelteile A und B' ineinander ergibt.

Durch die sich aus erster Dichtlippe 12, Bogen 20 und zweiter Dichtlippe 14 ergebende zusammenhängende und umlaufende Dichtkante wird eine sichere statische und dynamische Ölabdichtung der Innenseite des Tragkörpers 3 gegenüber der Führungsschiene erreicht.

Aus Fig. 5 wird weiter noch einmal die Lage der zur Nebenabdichtung gegenüber dem Tragkörper 3 vorgesehenen vierten Dichtlippe 21 und der Verlauf der beiden Stege 33 und 34 ersichtlich.

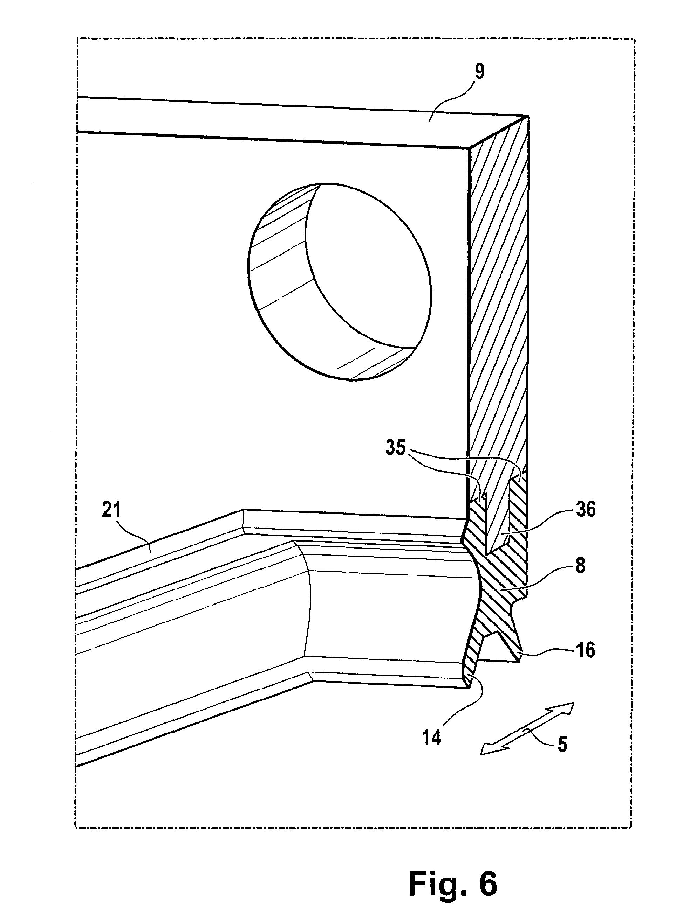

In Fig. 6 ist wiederum in einer perspektivischen Teilansicht der Blick auf eine Schnittkante der am Tragkörper 3 befestigten Trägerplatte 9 mit einem daran befestigten Querdichtungsabschnitt 8 dargestellt. Man erkennt in dieser Darstellung deutlich die zweite Dichtlippe 14 und die hierzu parallel verlaufende dritte Dichtlippe 16, die quer zur Verstellrichtung 5 angeordnet sind. An der Innenseite der Trägerplatte 9 wird auch der Verlauf der vierten Dichtlippe 21 ersichtlich.

Dem Profil des Querdichtungsabschnitts 8 sind weiter zwei Schenkel 35 zu entnehmen, zwischen denen eine Ausnehmung 36 gebildet ist, in die ein entsprechender Steg der Trägerplatte 9 eingreift. Hierdurch wird eine formschlüssige Verbindung zwischen dem Querdichtungsabschnitt 8 und der Trägerplatte 9 hergestellt, die bei einer Verstellung des Tragkörpers 3 gegenüber der Führungsschiene in Verstellrichtung 5 einen sicheren Halt des Querdichtungsabschnitts 8 bewirkt.

### Liste der Bezugszahlen

1 Dichtung
3 Tragkörper
4 Ausnehmung
5 Verstellrichtung
6 umlaufender Rand
7 Längsdichtungsabschnitt
7' Längsdichtungsabschnitt
8 Querdichtungsabschnitt
8' Querdichtungsabschnitt
9 Trägerplatte
10 Eckbereich
11 Dichtabschnitt
12 erste Dichtlippe
13 Ölrückführöffnung
14 zweite Dichtlippe
15 Öltasche
15'Flächenbereich
16 dritte Dichtlippe
18 Bereich stetiger Krümmung
20 Bogen
21 vierte Dichtlippe
23 Profil zweite Dichtlippe
24 Spitze
25 Stoßkante
27 Höhe erste Dichtlippe
29 Profil erste Dichtlippe
30 Stoßkante
33 Steg
34 Steg
35 Schenkel
36 Ausnehmung
A,A',B,B' Einzelteile

## Patentansprüche

1. Tragkörper (3) einer hydrostatischen Linearführung mit einer vorgegebenen Verstellrichtung und mit einer zentralen Ausnehmung (4) zur Aufnahme einer Führungsschiene, wobei entlang eines umlaufenden Randes (6) der Ausnehmung (4) eine Dichtung (1) angeordnet ist, wobei die Dichtung (1) mit zwei im wesentlichen parallel zur Verstellrichtung (5) verlaufenden Längsdichtungsabschnitten (7,7') und mit zwei im Wesentlichen quer zur Verstellrichtung (5) verlaufenden Querdichtungsabschnitten (8,8') versehen ist, wobei entlang jedem Längsdichtungsabschnitt (7,7') eine erste Dichtlippe (12) und entlang jedem Querdichtungsabschnitt (8_{;}8') eine zweite. Dichtlippe (14) verläuft, und wobei die Längsdichtungsabschnitten (7,7`) und die Querdichtungsabschnitten und wobei die Längsdichtungsabschnitten (7,7') und die Querdichtungsabschnitten (8,8') miteinander verbunden sind, **dadurch gekennzeichnet, dass** die ersten Dichtlippen (12) und die zweiten Dichtlippen (14) mit einer stetigen Krümmung (18) ineinander übergehen.

2. Tragkörper (3) nach Anspruch 1, **dadurch gekennzeichnet, dass** die erste Dichtlippe (12) und die zweite Dichtlippe (14) über einen Bogen (20) ineinander übergehen.

3. Tragkörper (3) nach Anspruch 1 oder 2, **dadurch gekennzeichnet, dass** der Querdichtungsabschnitt (8,8') eine dritte Dichtlippe (16) umfasst, die im Wesentlichen parallel zur zweiten Dichtlippe (14) verläuft.

4. Tragkörper (3) nach einem der vorhergehenden Ansprüche, **dadurch gekennzeichnet, dass** die Höhe (27) der ersten Dichtlippe (12) entlang der Verstellrichtung (5) wellenförmig schwankt.

5. Tragkörper (3) nach Anspruch 4, **dadurch gekennzeichnet, dass** die Höhe (27) sinusförmig schwankt.

6. Tragkörper (3) nach einem der vorhergehenden Ansprüche, **dadurch gekennzeichnet, dass** die erste (12) und/oder die zweite Dichtlippe (14) quer zu ihrer Längsrichtung ein Profil (23,29) mit einem spitz zulaufenden Ende aufweisen.

7. Tragkörper (3) nach einem der vorhergehenden Ansprüche, **dadurch gekennzeichnet, dass** die erste (12) und die zweite Dichtlippe (14) ein einheitliches Profil (23,29) aufweisen.

8. Tragkörper (3) nach einem der vorhergehenden Ansprüche, **dadurch gekennzeichnet, dass** die erste (12) und/oder die zweite Dichtlippe (14) aus einem Material gefertigt ist, welches gegenüber dem übrigen Dichtungsmaterial eine erhöhte Steifigkeit aufweist.

9. Tragkörper (3) nach Anspruch 8, **dadurch gekennzeichnet, dass** die erste (12) und/oder die zweite Dichtlippe (14) mit einem Trägermaterial, insbesondere mit einem Metall oder einem Kunststoff, armiert sind.

10. Tragkörper (3) nach einem der vorhergehenden Ansprüche, **dadurch gekennzeichnet, dass** der Längsdichtungsabschnitt (7,7') und/oder der Querdichtungsabschnitt (8,8') Mittel zu einer form- und/oder kraftschlüssigen Anbindung an eine Komponente der Linearführung umfassen.

11. Tragkörper (3) nach einem der vorhergehenden Ansprüche, **dadurch gekennzeichnet, dass** sie mehrteilig gefertigt ist, wobei die Einzelteile (A, A', B, B')über jeweils eine Stoßkante (25,30) miteinander fest verbunden, insbesondere vernetzt, sind.

12. Tragkörper (3) nach Anspruch 11, **dadurch gekennzeichnet, dass** die Stoßkanten (25,30) jeweils gegenüber der Längsrichtung der Dichtlippen (12,14,16,21) schräg verlaufen oder stufenförmig ausgebildet sind.

13. Tragkörper (3) nach Anspruch 10 oder 11, **dadurch gekennzeichnet, dass** die Stoßkanten (25,30) jeweils in dem Längsdichtungsabschnitt (7,7') angeordnet sind.

14. Tragkörper (3) nach Anspruch 13, **dadurch gekennzeichnet, dass** der Querdichtungsabschnitt (8,8') einschließlich eines überwiegenden Bereiches der stetigen Krümmung (18) als ein Einzelteil (A, A') gefertigt ist.

15. Tragkörper (3) nach einem der vorhergehenden Ansprüche, **dadurch gekennzeichnet, dass** zur Abdichtung gegenüber einer Komponente der Linearführung im Einbauzustand eine vierte Dichtlippe (21) umfasst ist.

## Claims

1. Carrier body (3) of a hydrostatic linear guide with a predetermined adjustment direction and with a central recess (4) for receiving a guide rail, a seal (1) being arranged along a continuous margin (6) of the recess (4), the seal (1) being provided with two longitudinal seal portions (7, 7') running essentially parallel to the adjustment direction (5) and with two transverse seal portions (8, 8') running essentially transversally to the adjustment direction (5), a first sealing lip (12) running along each longitudinal seal portion (7, 7') and a second sealing lip (14) running along each transverse seal portion (8, 8'), and the longitudinal seal portions (7, 7') and transverse seal portions (8, 8') being connected to one another, **characterized in that** the first sealing lips (12) and the second sealing lips (14) merge one into the other with a continuous curvature (18).

2. Carrier body (3) according to Claim 1, **characterized in that** the first sealing lip (12) and the second sealing lip (14) merge one into the other via an arc (20).

3. Carrier body (3) according to Claim 1 or 2, **characterized in that** the transverse seal portion (8, 8') comprises a third sealing lip (16) which runs essentially parallel to the second sealing lip (14).

4. Carrier body (3) according to one of the preceding claims, **characterized in that** the height (27) of the first sealing lip (12) fluctuates in a wavy manner along the adjustment direction (5).

5. Carrier body (3) according to Claim 4, **characterized in that** the height (27) fluctuates in a sinusoidal manner.

6. Carrier body (3) according to one of the preceding claims, **characterized in that** the first (12) and/or the second (14) sealing lip have transversally to their longitudinal direction a profile (23, 29) with a tapering end.

7. Carrier body (3) according to one of the preceding claims, **characterized in that** the first (12) and the second (14) sealing lip have a uniform profile (23, 29).

8. Carrier body (3) according to one of the preceding claims, **characterized in that** the first (12) and/or the second (14) sealing lip are/is manufactured from a material which has increased rigidity in relation to the remaining sealing material.

9. Carrier body (3) according to Claim 8, **characterized in that** the first (12) and/or the second (14) sealing lip are reinforced with a carrier material, in particular with a metal or a plastic.

10. Carrier body (3) according to one of the preceding claims, **characterized in that** the longitudinal seal portion (7, 7') and/or the transverse seal portion (8, 8') comprise/comprises means for positive and/or non-positive tie-up to a component of the linear guide.

11. Carrier body (3) according to one of the preceding claims, **characterized in that** it is manufactured in multiple parts, the individual parts (A, A', B, B') being firmly connected to one another, in particular cross-linked, in each case via a butt edge (25, 30).

12. Carrier body (3) according to Claim 11, **characterized in that** the butt edges (25, 30) in each case run obliquely in relation to the longitudinal direction of the sealing lips (12, 14, 16, 21) or are of step-shaped form.

13. Carrier body (3) according to Claim 10 or 11, **characterized in that** the butt edges (25, 30) are arranged in each case in the longitudinal seal portion (7, 7').

14. Carrier body (3) according to Claim 13, **characterized in that** the transverse seal portion (8, 8'), including a predominant region of the continuous curvature (18), is manufactured as an individual part (A, A').

15. Carrier body (3) according to one of the preceding claims, **characterized in that** it comprises a fourth sealing lip (21) for sealing off in relation to a component of the linear guide in the installation state.

## Revendications

1. Corps de support (3) d'un guidage linéaire hydrostatique comprenant une direction de réglage prédéfinie et un évidement central (4) pour recevoir un rail de guidage, un joint d'étanchéité (1) étant disposé le long d'un bord périphérique (6) de l'évidement (4), le joint d'étanchéité (1) étant pourvu de deux portions de joint d'étanchéité longitudinales (7, 7') s'étendant essentiellement parallèlement à la direction de réglage (5) et de deux portions de joint d'étanchéité transversales (8, 8') s'étendant essentiellement transversalement à la direction de réglage (5), une première lèvre d'étanchéité (12) s'étendant le long de chaque portion de joint d'étanchéité longitudinale (7, 7') et une deuxième lèvre d'étanchéité (14) s'étendant le long de chaque portion de joint d'étanchéité transversale (8, 8'), et les portions de joint d'étanchéité longitudinales (7, 7') et les portions de joint d'étanchéité transversales (8, 8') étant reliées les unes aux autres, **caractérisé en ce que** les premières lèvres d'étanchéité (12) et les deuxièmes lèvres d'étanchéité (14) se prolongent les unes dans les autres avec une courbure constante (18).

2. Corps de support (3) selon la revendication 1, **caractérisé en ce que** la première lèvre d'étanchéité (12) et la deuxième lèvre d'étanchéité (14) se prolongent l'une dans l'autre par le biais d'un arc (20).

3. Corps de support (3) selon la revendication 1 ou 2, **caractérisé en ce que** la portion de joint d'étanchéité transversale (8, 8') comprend une troisième lèvre d'étanchéité (16) qui s'étend essentiellement parallèlement à la deuxième lèvre d'étanchéité (14).

4. Corps de support (3) selon l'une quelconque des revendications précédentes, **caractérisé en ce que** la hauteur (27) de la première lèvre d'étanchéité (12) varie de manière ondulée le long de la direction de réglage (5).

5. Corps de support (3) selon la revendication 4, **caractérisé en ce que** la hauteur (27) varie de manière sinusoïdale.

6. Corps de support (3) selon l'une quelconque des revendications précédentes, **caractérisé en ce que** la première (12) et/ou la deuxième (14) lèvre d'étanchéité présentent, transversalement à leur direction longitudinale, un profil (23, 29) avec une extrémité se terminant en pointe.

7. Corps de support (3) selon l'une quelconque des revendications précédentes, **caractérisé en ce que** la première (12) et la deuxième (14) lèvre d'étanchéité présentent un profil unitaire (23, 29).

8. Corps de support (3) selon l'une quelconque des revendications précédentes, **caractérisé en ce que** la première (12) et/ou la deuxième (14) lèvre d'étanchéité sont fabriquées en un matériau qui présente une rigidité accrue par rapport au matériau d'étanchéité restant.

9. Corps de support (3) selon la revendication 8, **caractérisé en ce que** la première (12) et/ou à deuxième (14) lèvre d'étanchéité sont renforcées par un matériau de support, notamment un métal ou un plastique.

10. Corps de support (3) selon l'une quelconque des revendications précédentes, **caractérisé en ce que** la portion de joint d'étanchéité longitudinale (7, 7') et/ou la portion de joint d'étanchéité transversale (8, 8') comprennent des moyens pour un raccordement par engagement par correspondance de forme et/ou par force à un composant du guidage linéaire.

11. Corps de support (3) selon l'une quelconque des revendications précédentes, **caractérisé en ce qu'**il est fabriqué en plusieurs parties, les parties individuelles (A, A', B, B') étant reliées les unes aux autres de manière fixe par le biais d'une arête de butée respective (25, 30), en particulier par réticulation.

12. Corps de support (3) selon la revendication 11, **caractérisé en ce que** les arêtes de butée (25, 30) s'étendent à chaque fois obliquement par rapport à la direction longitudinale des lèvres d'étanchéité (12, 14, 16, 21) ou sont réalisées sous forme étagée.

13. Corps de support (3) selon la revendication 10 ou 11, **caractérisé en ce que** les arêtes de butée (25, 30) sont disposées à chaque fois dans la portion de joint d'étanchéité longitudinale (7, 7').

14. Corps de support (3) selon la revendication 13, **caractérisé en ce que** la portion de joint d'étanchéité transversale (8, 8'), y compris une région majoritaire de la courbure constante (18), est fabriquée sous forme de pièce individuelle (A, A').

15. Corps de support (3) selon l'une quelconque des revendications précédentes, **caractérisé en ce qu'**il est prévu une quatrième lèvre d'étanchéité (21) pour l'étanchéité par rapport à un composant du guidage linéaire dans l'état de montage.
